# EUROPEAN PATENT APPLICATION

(11) **EP 3 840 326 A1**
(43) Date of publication of application: **23.06.2021**
(21) Application number: 20214714.6
(22) Date of filing: 16.12.2020
(51) Int. Cl.: H04L 29/06, H04L 29/08, G06F 21/55, G05B 19/418

(54) **SYSTEMS AND METHODS FOR MITIGATING ELECTRICAL INSTALLATION SECURITY THREATS**

(30) Priority: 17.12.2019 US 201916717670
(71) Applicant: General Electric Technology GmbH, 5400 Baden (CH)
(72) Inventor: CARDENAS MEDINA, Jorge Eduardo, 48170 Vizcaya (ES); COSOREANU, Claudia Adriana, Markham, Ontario L6C 0M1 (CA); WEERATHUNGA, Pubudu Eroshan, Markham, Ontario L6C 0M1 (CA)
(74) Representative: Brevalex

(57) **Abstract**

Disclosed are systems and methods for mitigating electrical installation security threats. In some embodiments, the systems and methods may involve receiving a status signal for at least one digital communication channel associated with an electrical installation system. The systems and methods may further involve determining that a cybersecurity threat exists for an electrical installation system. The systems and methods may further involve inhibiting based on the status signal for the at least one digital communications channel and on a determination that the cybersecurity threat exists, further communications to one or more components of the electrical installation system via the at least one digital communication channel. The systems and methods may further involve activating a second communication channel for the one or more components of the electrical installation system.

## Description

### TECHNICAL FIELD

The present disclosure relates to cybersecurity threat detection and warning systems, and in particular relates to systems and methods for mitigating electrical installation security threats.

### BACKGROUND

Conventional cybersecurity systems in some contexts (e.g., in electrical substations) may only be "defensive" in nature. For example, the design intent in conventional cybersecurity systems may only be to block an intrusion or cyber-attack without consideration for system recovery once the attack has subsided or been addressed. Under such current solutions, once a cyber-attack has taken place, an entire system could be taken offline and human intervention may be required to restart the system, which may result in major losses due to lengthy unplanned interruptions of operations.

### BRIEF SUMMARY

Embodiments of the disclosure can provide an early warning cybersecurity system for an electrical installation, or a generation power plant. Further, certain embodiments of the disclosure can provide systems and methods for mitigating the impact of cybersecurity threats, such as to electrical installations. Moreover, certain embodiments of the disclosure can provide systems and methods for recovering and/or rehabilitating affected electrical installations and associated components after a cyber-attack. Some or all of the above needs and problems can be addressed by certain embodiments of the disclosure described below.

In at least one embodiment, a computer-implemented method can be provided. The computer-implemented method may include receiving, by a processor, a status signal for at least one digital communication channel associated with an electrical installation system. The method may also include determining, by the processor, that a cybersecurity threat exists for an electrical installation system. The method may also include inhibiting, by the processor, based at least in part on the status signal for the at least one digital communications channel and on a determination that the cybersecurity threat exists, further communications to one or more components of the electrical installation system via the at least one digital communication channel. The method may also include activating, by the processor, a second communication channel for the one or more components of the electrical installation system.

In at least one aspect of some embodiments, the method may also include determining, by the processor, the cybersecurity threat does not exist. The method may also include activating, by the processor, the at least one digital communication channel and disconnecting the second communication channel from the one or more components of the electrical installation system.

In at least one aspect of some embodiments, inhibiting further communications to the electrical installation system via the at least one digital communication channel may include disconnecting one or more components of the electrical installation system from the at least one digital communication channel.

In at least one aspect of some embodiments, inhibiting further communications to the electrical installation system via the at least one digital communication channel may include disconnecting one or more components of the electrical installation system from the at least one digital communication channel.

In at least one aspect of some embodiments, activating the second communication channel on the electrical installation system may include enabling at least one serial communication port for an intelligent electronic device (IED) associated with the electrical installation system.

In at least one aspect of some embodiments, the second communication channel may include an analog communication channel facilitated by one or more intelligent electronic device (IED) associated with the electrical installation system.

In at least one aspect of some embodiments, disconnecting one or more components of the electrical installation system from the at least one digital communication channel further includes continuing secure communications on other components of the electrical installation system using an alternative digital communication channel.

In another embodiment, a system can be provided. The system may include at least one memory configured to store computer-executable instructions; and at least one processor configured to access the at least one memory and execute the computer-executable instructions. In various embodiments, the computer-executable instructions may cause the system to receive a status signal for at least one digital communication channel associated with an electrical installation system. The computer-executable instructions may also cause the system to determine that a cybersecurity threat exists for an electrical installation system. The computer-executable instructions may also cause the system to inhibit, based at least in part on the status signal and on a determination that the cybersecurity threat exists, further communications to one or more components of the electrical installation system via the at least one digital communication channel. The computer-executable instructions may also cause the system to activate a second communication channel for the one or more components of the electrical installation system.

In at least one aspect of some embodiments, the computer-executable instructions may also cause the system to determine the cybersecurity threat does not exist. The computer-executable instructions may also cause the system to activate the at least one digital communication channel and disconnecting the second communication channel from the one or more components of the electrical installation system.

In at least one aspect of some embodiments the computer-readable instructions operable to determine that a cybersecurity threat exists, further includes instructions operable to determine that the cybersecurity threat exists based at least in part on an indication from at least one of a digital twin of the electrical installation system or a firewall of at least one network associated with the electrical installation system.

In at least one aspect of some embodiments, the computer-readable instructions operable to inhibit further communications to the electrical installation system via the at least one digital communication channel further includes instructions operable to disconnect one or more components of the electrical installation system from the at least one digital communication channel.

In at least one aspect of some embodiments, the computer-readable instructions operable to activate the second communication channel on the electrical installation system further includes instructions operable to enable at least one serial communication port for an intelligent electronic device (IED) associated with the electrical installation system.

In at least one aspect of some embodiments, the second communication channel is an analog or serial communication channel, and wherein the second communication channel is not in communication with a local area network, or the Internet.

In at least one aspect of some embodiments, the second communication channel includes an analog communication channel facilitated by one or more intelligent electronic device (IED) associated with the electrical installation system.

In at least one aspect of some embodiments, the computer-readable instructions operable to disconnect one or more components of the electrical installation system from the at least one digital communication channel further includes instructions operable to continue secure communications on other components of the electrical installation system using an alternative digital communication channel.

In at least one embodiment, a non-transitory computer-readable medium may be provided. The computer-readable medium may store computer-executable instructions which when executed by one or more processors result in performing operations including receive a status signal for at least one digital communication channel associated with an electrical installation system. The operations may also include determine that a cybersecurity threat exists for an electrical installation system. The operations may also include inhibit, based at least in part on the status signal and on a determination that the cybersecurity threat exists, further communications to one or more components of the electrical installation system via the at least one digital communication channel. The operations may also include activate a second communication channel for the one or more components of the electrical installation system.

In at least one aspect of some embodiments, the operations may also include determine, by the processor, the cybersecurity threat does not exist. The operations may also include activate, by the processor, the at least one digital communication channel and disconnecting the second communication channel from the one or more components of the electrical installation system.

In at least one aspect of some embodiments, inhibit further communications to the electrical installation system via the at least one digital communication channel, further cause the at least one processor to disconnect one or more components of the electrical installation system from the at least one digital communication channel.

In at least one aspect of some embodiments, activate the second communication channel on the electrical installation system, further cause the at least one processor to enable at least one serial communication port for an intelligent electronic device (IED) associated with the electrical installation system.

Additional systems, methods, apparatus, features, and aspects can be realized through the techniques of various embodiments of the disclosure. Other embodiments and aspects of the disclosure are described in detail herein and are considered a part of the claimed subject matter. Other features can be understood and will become apparent with reference to the description and to the drawings.

### BRIEF DESCRIPTION OF THE DRAWINGS

**FIG. 1** illustrates an example architecture of system inputs and outputs according to an embodiment of the disclosure.
**FIG. 2** illustrates an example system architecture according to an embodiment of the disclosure.
**FIG. 3** illustrates an example threat detection system according to an embodiment of the disclosure.
**FIG. 4** illustrates an example system architecture according to an embodiment of the disclosure.
**FIG. 5** illustrates an example control scheme according to an embodiment of the disclosure.
**FIG. 6** illustrates an example control scheme according to an embodiment of the disclosure.
**FIG. 7** illustrates an example control scheme according to an embodiment of the disclosure.
**FIG. 8** illustrates an example system logical flow diagram according to an embodiment of the disclosure.
**FIG. 9** illustrates an example method flow diagram according to an embodiment of the disclosure.
**FIG. 10** illustrates an example computer architecture according to an embodiment of the disclosure.

Embodiments of the disclosure now will be described more fully hereinafter with reference to the accompanying drawings, in which certain embodiments are shown. This disclosure may, however, be embodied in many different forms and should not be construed as limited to the embodiments set forth herein; rather, these embodiments are provided so that this disclosure will be thorough and complete, and will fully convey the scope of the disclosure to those skilled in the art. Like numbers refer to like elements throughout.

### DETAILED DESCRIPTION OF THE DISCLOSURE

Embodiments of the disclosure can provide systems and methods for mitigating electrical installation security threats. In some embodiments, an electrical installation as a substation can be a component in an electrical generation, transmission, and distribution grid or system. An example electrical installation can transform electric power by way of one or more transformers converting the power from a relatively high voltage to a lower voltage. The electrical installation can receive electric power from a high voltage electrical transmission line and transformer or otherwise lower the voltage of the received electric power, for transmission to distribution lines connecting to a residential area. The term "installation" used in the specification can also mean "electrical installation". An example security threat to an electrical installation may be a cybersecurity attack. Previous security threat mitigation solutions may involve taking the entire installation offline. In order to bring the installation back online, human intervention may be required, which may result in major losses due to lengthy unplanned interruptions of operations. Thus, the systems and methods described herein may involve the use of multiple communication channels for the components located at the installation that may be impacted by a security threat. For example, under normal operation (e.g., when no security threats are detected), a first communication channel may be used by components of the installation, such as a digital communication channel. This digital communication channel may be connected to local components, and may also be connected to remote components through, for example, a wide area network or the Internet. In the event that a security threat is detected in the subsystem, the communications taking place on the main communication channel may be at risk of malicious activities. To mitigate this risk, a second communication channel may be provided as an alternative to the main communication channel. This alternative communication channel may either be a second digital communication channel or may also be an analog communication channel. The alternative communication channel may also only be connected to local components of the installation to reduce the possibility that an external source of a security threat is able to access the alternative communication channel. This may allow the installation to continue operations using the second communication channel without being impacted by the security threat that may impact the first communication channel.

In some instances, the multiple communication channels may be utilized to mitigate a security threat at the installation as follows. The main communication channel may be in use during normal operation of the installation. Once a security threat is detected at the installation, the main communication channel may be inhibited or deactivated, and communication may instead be performed on the alternative communication channel. In some embodiments, the main communication channel and the alternative communication channel may be in use even during normal operation, and the main communication channel may simply be inhibited while the alternative communication channel remains active. In some embodiments, however, a switch over may be performed, which may instead involve inhibiting the main communication channel, and then subsequently activating the alternative communication channel, which may have been inactive during the normal operation of the installation. In either embodiment, the alternative communication channel may be the primary channel of communication for the components of the installation until the security threat is eliminated, at which point the installation may revert back to the use of the main communication channel or the combination of the main communication channel and the alternative communication channel.

Additionally, certain embodiments of the systems and methods described herein may be used beyond the context of a security threat to a installation. For example, some or all of the mitigation solutions may be used when a fault or internal error is detected on the installation. That is, the mitigation solutions described herein may be used in any scenario where the operations of the installation would otherwise be required to be completed or otherwise halted to eliminate or otherwise mitigate a detected problem at the installation.

### EXAMPLE SYSTEM ARCHITECTURE

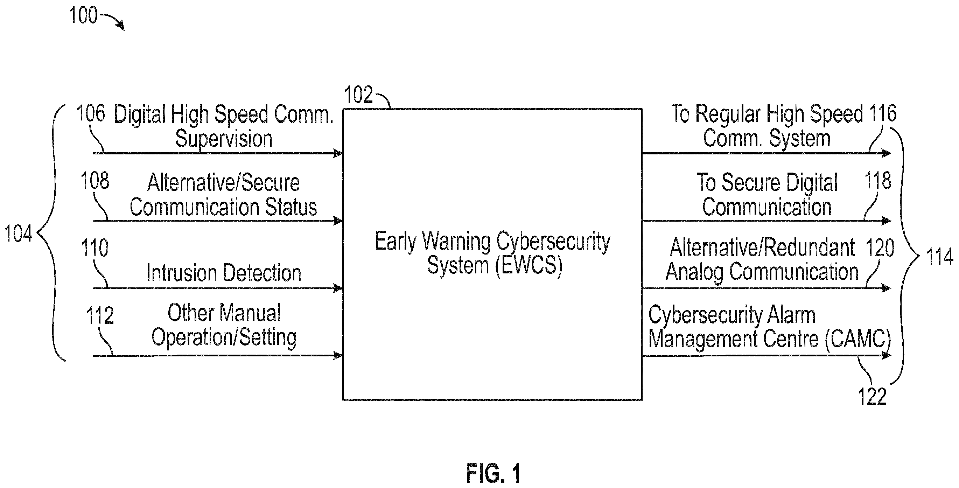

**FIG. 1** illustrates an example architecture 100 showing system inputs and outputs according to an embodiment of the disclosure. The early warning cybersecurity system (EWCS) 102 as depicted in **FIG. 1** may operate in the context of an electrical installation shown in other figures of the disclosure. The EWCS 102 may include any number of inputs 104, such as a digital high speed communication supervision input 106 (which may be used to remotely control equipment associated with the electrical installation, such as circuit breakers, isolator switches, motors, etc.), an alternative/secure communication status input 108 (which may be similar to the digital high speed communication supervision input 106, but may involve the use of analog technology instead of digital technology), an intrusion detection input 110 (which may be an input that indicates a cybersecurity threat on a communication line of the installation or the installation as a whole, which may be triggered by a firewall or ghost system as described below), and/or a manual operation or settings input 112 (which may be a general purpose input that allows operators to manually activate the EWCS 102 in a similar way to automatic intrusion detection does. This may allow the operator to verify the correct functionality of the system and also may provide an additional path in case of possible suboptimal operation of the intrusion detection system). This listing of outputs is not intended to be limiting, and the EWCS 102 may also include any number of other outputs.

In some embodiments, the EWCS 102 may detect and warn of a security threat to a installation. To do so, the EWCS 102 may be implemented as a sentinel using a ghost system that emulates the actual or main system (e.g., the installation). The ghost system may include a copy of the components of the installation in a "digital twin" (or may alternatively simply involve the use of an associated firewall with a network in communication with one or more components of the installation). The ghost system may also be responsible for verifying if requests made to the installation are secure. In the event of a security threat, the ghost system may be able to detect a cyber-attack, and subsequently delay a cyber-attacker by simultaneously activating various installation alarms and/or automatically disconnecting the remote connections (e.g., Ethernet network connections) to inhibit access by the cyber-attacker to the installation. An automatic sequence of actions can also take complementary actions to allow the controls of one or more installation components (e.g., such as disconnectors and circuit breakers) to be implemented via one or more respective serial communication ports existing in such components. After the main system is considered secure, the main system can be recovered automatically, or can be recovered under operator request using the one or more serial communication channels. An example ghost system and "digital twin" are described in "Systems and Methods for Protecting a Physical Asset Against a Threat", U.S. Patent Application Serial No. 15/290,306, filed October 11, 2016, the contents of which are incorporated herein by reference.

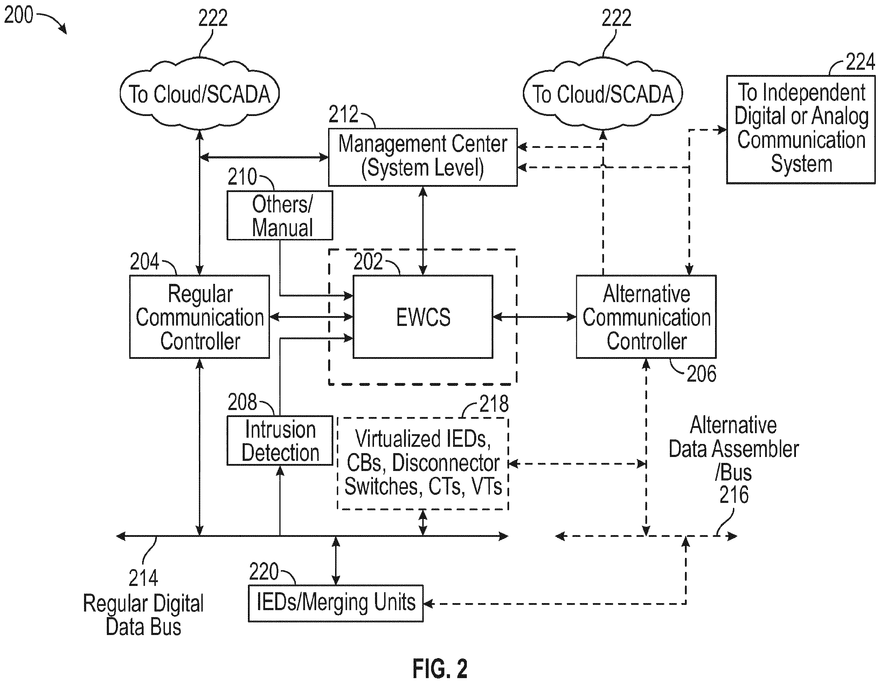

**FIG. 2** may be a more detailed description of **FIG. 1** and its relationship with other components of the electrical installation. **FIG. 2** illustrates an example system architecture 200 according to an embodiment of the disclosure. In some embodiments, the system architecture 200 includes at least an EWCS 202 (which may be the same as EWCS 100 depicted in **FIG. 1**). The EWCS 202 may be in communication with one or more communication controllers, which may include, for example, a regular communication controller 204 and/or an alternative communication controller 206. The EWCS 202 may also be in communication with an intrusion detection system 208 (which may, for example, provide a signal to the intrusion detection input 110 described with respect to **FIG. 1**), be activated manually by operators through a manual activation input 210, and may include a management center 212. The management center 212 may be an additional function of a supervisory control and data acquisition (SCADA) existing in the electrical installation and may have the purpose of local control and supervision of an EWCS (such as, for example, EWCS 102 described with reference to **FIG. 1****,** or any other EWCS described herein). The system architecture 200 may further include one or more communication buses, including, for example, a main communication bus 214 and an alternative communication bus 216. The one or more communication buses may allow some or all of the components described as being included within the system architecture 200 to communicate with one another. For example, the one or more communication buses may also allow the components of the system architecture to communicate with one or more intelligent electronic devices (IEDs) and/or merging units 220 and one or more virtualized devices 218 (e.g., virtualized IEDs, CBS, disconnector switches, CTs, VTs, included in a "digital twin" as described herein). Additionally, some or all of the components described as being included within the system architecture 200 may be in communication with a cloud system 222 and/or an independent digital or analog communication system 224.

The controllers (e.g., regular communication controller 204 and/or alternative communication controller 206) may be responsible for controlling which communication systems (e.g., which data buses) are active and in use by the installation. For example, the regular communication controller 204 may be responsible for controlling a first communication system, which may be a main communication system. The main communication system may be a communication system that is active and in use during normal operations and when a cybersecurity threat has not been detected or has already been cleared (among other conditions). The alternative communication controller 206 may be responsible for controlling a second communication system, which may be an alternative communication system that is activated and in use in the event that a cybersecurity threat is detected (among other conditions). The main communication system and the alternative communication system may either be digital communication systems and/or analog communication systems. In some instances, the regular communication controller 204 and/or the alternative communication controller 206 may be in communication with a cloud system 222, in scenarios involving installations that may be controlled remotely. The alternative communication controller 206 may also be in communication with an independent digital and/or analog communication system 224 that may be used when the main communication path has been disabled by the action of EWCS 202. It should be noted that the terms "communication system" and "communication channel" may be used interchangeably herein, and may be intended to be synonymous.

The communication buses (e.g., main communication bus 214 and alternative communication bus 216) may provide connections (physical and/or logical) between any of the components described herein with respect to **FIG. 2** (e.g., EWCS 202, communication controllers, intrusion detection system 208, manual activation input 210, and a management center 212 (which may be similar to the management center 212 described with respect to **FIG. 2**), etc.). The connections can be made via one or more traffic and signaling pipes, which can comprise wireline link(s) and/or wireless link(s) and several network elements (such as routers or switches, concentrators, servers, and the like) that form a local area network (LAN) and/or a wide area network (WAN). In some instances, the main communication bus 214 and alternative communication bus 216 may be separate communication buses, with the alternative communication bus 216 being activated and used based upon a determination that a cybersecurity threat is detected on the main communication bus 214, for example (among other conditions).

The IEDs/merging units 220 may represents all intelligent electronic devices (IED), such as, for example, protective relays, controllers, and meters installed in the installation. The virtualized devices 218 may be devices represented in a digital twin as described herein (e.g., virtualized IEDs, CBS, disconnector switches, CTs, VTs)

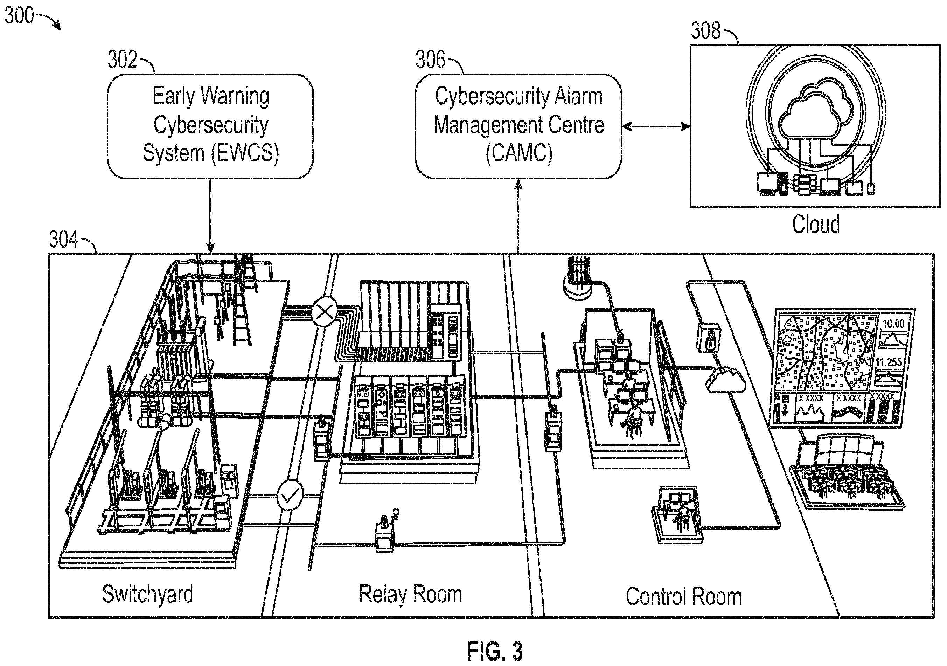

**FIG. 3** illustrates an example configuration of an installation associated with an EWCS system showing threat detection system 300 according to an embodiment of the disclosure. The threat detection system 300 may, for example, be a part of a system, such as system architecture 200 described with reference to **FIG. 2****.** The threat detection system may include an EWCS 302, which may be the same as EWCS 102 described with respect to **FIG. 1****.** The EWCS 302 may be in communication with a ghost system, which may include a digital twin or digital installation replica 304. The digital installation replica 304 may include component models (e.g., components of the installation, such as CT/VTs, transformers, circuit breakers, etc.) and may include any component inputs and/or outputs. The digital installation replica 304 may be configured to identify normal operating condition data sets from the component inputs and/or outputs and distinguish them from abnormal conditions. In the event of an abnormal condition that may be indicative of a security threat, an alert may be provided to a management center 306, which may be located remotely or locally to the installation. If the management center 306 is local to the installation, it may also be in communication with a remote cloud platform 308.

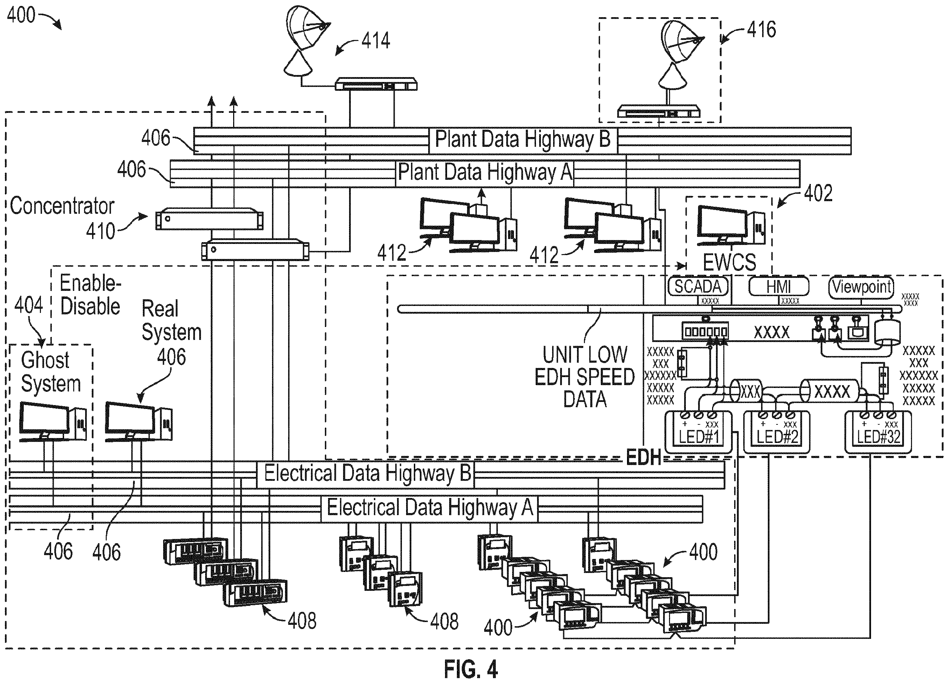

**FIG. 4** illustrates an example system architecture 400 according to an embodiment of the disclosure. **FIG. 4** may represent another visualization of a subsystem, such as system architecture 200 described with respect to **FIG. 2****.** **FIG. 4** may also illustrate a system architecture including components as IEDs and a threat detection system, such as the threat detection system described with respect to **FIG. 3****.** The system architecture 400 may include an EWCS 402, which may be the same as EWCS 102, a ghost system, which may be the same as the ghost system described with respect to **FIG. 3****,** a real system 406, which may be the real installation components (e.g., not the digital duplicate as found in the ghost system 404), one or more buses 406, one or more components 408, one or more concentrators 410 (e.g., which may be computers used as gateways), one or more SCADA systems 412, which may be computers that collect and process local data from components used to protect and control the primary equipment (408, 409) 414, and 416 show connection with upper management and supervision levels. 414 corresponds to the SCADA system of the grid and 416 GPS reception used to synchronize all IEDs and computers.

### EXAMPLE OVERALL PROCESS FLOW

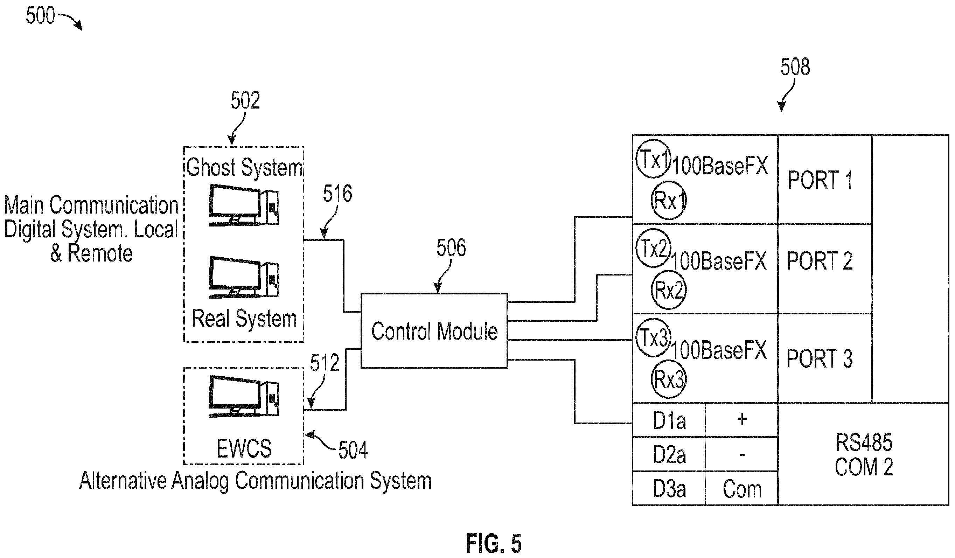

**FIG. 5** illustrates an example control scheme 500 according to an embodiment of the disclosure. In the embodiment depicted in **FIG. 5****,** the example control scheme 500 may include at least a first communication system 502 (e.g., regular communication bus 214) and a second communication system 504 (e.g., alternative communication bus 216 or the independent digital or analog communication system 224). The control scheme 500 may also include a control module 506, which include, for example, any of the EWCS systems described here (e.g., EWCS 102) or any of the controllers described herein (e.g., regular communication controller 204 and/or alternative communication controller 206). The control scheme 500 may also include IED hardware 508.

The first communication system 502 may be a main communication system that may be in use during normal operations of the subsystem when no threats have been detected (among other conditions, such as no internal errors existing in the subsystem, for example). The first communication system 502 may be a digital communication system and may be in communication with both local and remote systems and/or devices (e.g., cloud system 222). For example, the first communication system may involve the use of Ethernet and/or wireless connections to communicate with the remote systems and/or devices. IEDs may have several communication Ethernet high speed and capacity ports that may be used for regular communication to SCADA systems, to send information on measured parameters and status of primary devices, and receive commands that may later be converter in electrical signals to open or trip primary elements, such as circuit breakers and isolator switches. This communication may be critical, as the control of all assets in the installation may depend on these ports when installations are remotely controlled. Based on the commercial availability of communication protocols used to control such IEDs such communication channels may be susceptible to be to cyber-attacks.

The second communication system 504 may be an analog communication system, and may be an alternative or secondary communication system to the first communication system 502. The second communication system 504 may be facilitated by one or more intelligent electronic device (IED) associated with the electrical installation system. For example, the second communication system 504 may include connections to serial ports of the IEDs of the electrical installation system. The second communication system 504 may also be in communication with both local and remote systems and devices or may only be in communication with local systems and/or devices. Limiting communication of the second communication system 504 to only local systems and/or devices may reduce the risk of the second communication system 504 being exposed to an external threat. The ports used by the second communication system 504 may be legacy ports and may be based on analog technology. In normal operation of an installation these ports may not be used, as they may not bring the capacity and speed of the digital communication ports However, their capacity may be enough to support basic SCADA functions, such as monitoring and control of the main elements as circuit breakers and isolator switches. This basic control may be sufficient enough to maintain active the minimum functionality in the electrical installation.

The control module 506 may function to control usage of and/or access to an electrical installation system (e.g., the IED hardware 508) through the first communication system 502 and/or the second communication system 504. The control module 506 may receive status signals regarding the first communication system 502 and/or the second communication system 504, which may, for example, provide an indication as to whether a cybersecurity threat is detected on either malfunctioning of the communication systems. Some failure conditions (in black) are listed together with cyber-attack conditions (in red) in Table 1. These failure conditions could be different in other IEDs, but the purpose may be the same, that is to indicate a condition where the communication port is not available That is, the control module 506 may be responsible for inhibiting, by the processor of the control module 506, based at least in part on the status signal for the at least one digital communications channel and on a determination that the cybersecurity threat exists, further communications to the electrical installation system via the at least one digital communication channel, which may be the first communication channel 502. This may allow for continued operations of the electrical installation on the second communication system 504, which may not be impacted by the cybersecurity threat detected on the first communication system 502, if its disconnected from remote communications during normal operation. In some instances, the determination that a cybersecurity threat exists for an electrical installation system may be based at least in part on an indication from at least one of a digital twin of the electrical installation system or a firewall of at least one network associated with the electrical installation system. This determination may be based on, for example, the intrusion detection system 208 described with reference to **FIG. 2****.** Additionally, inhibiting further communications to the electrical installation system via the at least one digital communication channel may further include disconnecting one or more components of the electrical installation system from the at least one digital communication channel. Finally, disconnecting one or more components of the electrical installation system from the at least one digital communication channel may further include continuing secure communications on other components of the electrical installation system using an alternative digital communication channel. That is, both the first and second communication channel may be active and in use during normal operation, and the first communication channel may simply be deactivated while the second communication channel remains in use.

The IED hardware 508. It should be noted that the IED hardware 508, as well as any other IED hardware described herein, may represent an example of IED hardware (any may also only represent a portion of IED hardware) and may also represent the communication channels available in one specific IED. Other type of IEDs may contain less or more communication channels, for example.

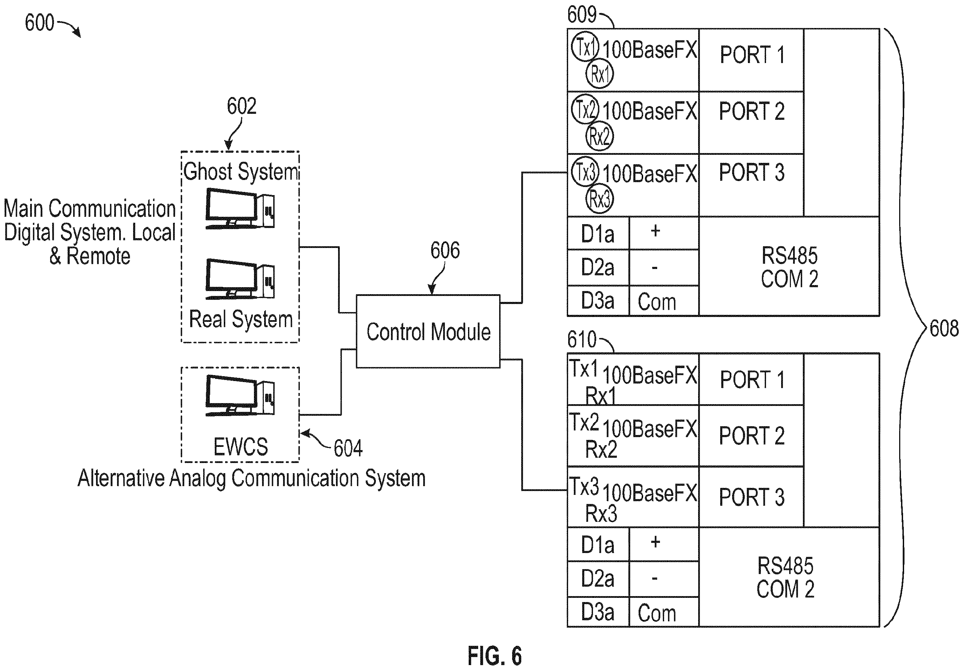

**FIG. 6** illustrates another example control scheme 600 according to an embodiment of the disclosure. The control scheme 600 may be similar to the control scheme 500 described with respect to **FIG. 5****,** but may differ in that the second communication system may also be digital. That is, control scheme 600 may include at least a first communication system 602 and a second communication system 604. The first communication system 602 may be a main communication system that may be used during normal operations of the subsystem when no threats have been detected (among other conditions, such as no internal errors existing in the subsystem, for example). The first communication system 602 may be a digital communication system and may be in communication with both local and remote systems and/or devices. The second communication system 604 may be an alternative digital communication system using a different IED hardware, and may be a secondary communication system for the first communication system 602. The second communication system 604 may also be in communication with both local and remote systems and devices or may only be in communication with local systems and/or devices. Control scheme 600 may also include a control module 606, which include, for example, any of the EWCS systems described here (e.g., EWCS 102) or any of the controllers described herein (e.g., regular communication controller 204 and/or alternative communication controller 206). The control scheme 600 may also include 608. As depicted in **FIG. 6****,** in some embodiments the control scheme 600 may include more than one IED hardware 608 (e.g., IED hardware 609 and/or IED hardware 610.

In some instances, the control module 606 of **FIG. 6** may function to control usage of and/or access to the IED hardware 609 or 610 in a main and backup configuration through the first communication system 602 and/or the second communication system 604. Control module 606 may function similarly to control module 506, with one difference including disconnecting one or more components of the electrical installation system from the at least one digital communication channel may include continuing secure communications on other components of the electrical installation system using an alternative digital communication channel in another IED, instead of an alternative analog communication channel in the same IED. Multiple IED hardware may be used to control the same asset give higher security, minimizing the risk of loss control of the installation if the cyber-attack has affected the main IED as well.

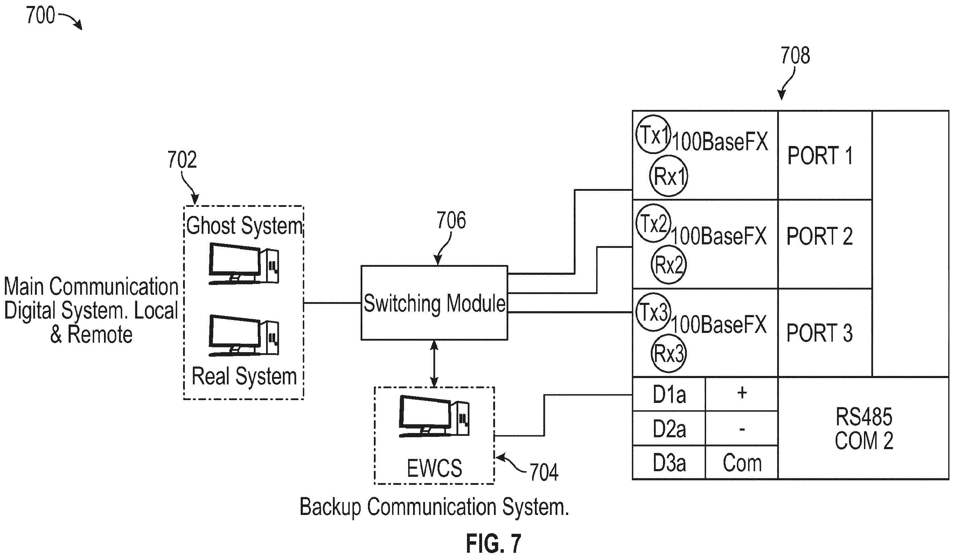

**FIG. 7** illustrates another example control scheme 700 according to an embodiment of the disclosure. The control scheme 700 may be similar to the control schemes 500 and 600 described with respect to **FIGs. 5** **and** **6****,** but may differ in that the control module 706 functions as a switching module in that the control module 706 acts to inhibit the first communication system 702 and switch over to the second communication system 704. That is, the control schemes 500 and 600 may involve disconnecting one or more components of the electrical installation system from the at least one main communication channel and continuing secure communications on an alternative digital or analog communication channel that was already active with the main communication channel, whereas the control scheme 700 may involve deactivating a main communication channel, activating a second communication channel, and switching over the second communication channel. In the embodiment depicted in **FIG. 7** the example control scheme 700 may include at least a first communication system 702 and a second communication system 704. Control scheme 700 may also include a control module 706, which include, for example, any of the EWCS systems described here (e.g., EWCS 102) or any of the controllers described herein (e.g., controller 204 and/or controller 206). Control scheme 700 may also include IED hardware 708.

The first communication system 702 may be a main communication system that may be used when no cyber threats are detected on the system. The first communication system 702 may be a digital communication system and may be in communication with both local and remote systems and/or devices. The second communication system 704 may be an alternative digital and/or analog communication system, and may be a secondary communication system for the first communication system 702.

The second communication system 704 may also be in communication with both local and remote systems and devices or may only be in communication with local systems and/or devices. control scheme 700 may also include a control module 706, which include, for example, any of the EWCS systems described here (e.g., EWCS 102) or any of the controllers described herein (e.g., controller 204 and/or controller 206). The second communication channel may connect different elements (e.g., SCADA, IEDs, etc.) to the control system of primary devices, such as circuit breakers and isolator switches, in similar way as the primary communication channel, which may allow basic control of the installation to continue until the main communication channel is recovered (for example, after the cyber-security threat is eliminated).

In some instances, the control module 706 of **FIG. 7** may function to control usage of and/or access to the IED hardware 708 through the first communication system 702 and/or the second communication system 704. The control module 706 may also be responsible for activating, by the processor of the control module 706, a second communication channel for the electrical installation system, which may be the second communication system 704. In other words, the alternative digital or analog communication channel was already in use, and the main digital communication channel is disconnected while the alternative communication channel simply remains in use. Control module 706 may function similarly to control modules 506 and 606, with one difference including switching between a first communication channel and a second communication channel instead of merely deactivating a main communication channel of two already active communication channels. This switching of communication channels may take place based on a number of conditions, some of which may be outlined below in the example shown in Table 1. Some of the conditions listed in Table 1 may be IED-specific, and some may be applicable to the EWCS as a whole. Descriptions of each of the conditions listed in Table 1 may be found in Table 2 below.

**Table 1**

| **Automatic Switching during a Cyber-attack or Ethernet failure** | | |
|---|---|---|
| **Conditions for Switching** | **Conditions to block** | **Conditions to Recover** |
| Manual Switching Enabled | Manual Block | Restore Enabled |
| Manual Switching | To be Defined | Switching Completed |
| Manual Block | | No Cyber-attack active |
| Selected Ethernet to trip | | |
| | | |
| Cyber-attack detected | | |
| All Ethernet Fail | | Switching Enabled |
| By Signals Enabling | | Manual Restore |
| Any Major Error | | No Any Major Error |
| Flexlogic Error | | No Flexlogic Error |
| System Failure | | No System Failure |
| | | No Manual Block |

**Table 2**

| **Description of Signals from Table 1** | |
|---|---|
| Manual Switching Enabled | Engage system to be activated by the SCADA operator |
| Manual Switching | EWCS activation by SCADA operator or during testing |
| Manual Block | Signal to block EWCS, either by SCADA operator or during testing |
| Selected Ethernet to trip | In case of two or more digital communication inputs, select input that will work as main communication channel that could be disconnected and transfer to alternative communication channel |
| Cyber-attack detected | Cyber-attack identified by action of Digital Ghost or Firewall |
| All Ethernet Fail | Digital communication inputs failure, to allows analog communication input to be activated |
| By Signals Enabling | List of internal signals from IEDs |
| Any Major Error | Any of the major self-test errors generated (major error) |
| Flexlogic error | Error in programmed logic used by IEDs or computers |
| System Failure | Failure of IED that cannot maintain it active |
| Restore Enabled | Engage EWCS restore to be ready to transfer communication from main to alternative one |
| Switching Completed | Successful action of EWCS |
| No Cyber attack active | No cyber-attack is being detected by Digital Ghost or Firewall |
| Switching Enabled | Output from AND gate 2 (812) |
| Manual Restore | Signal to restore EWCS, either by SCADA operator or during testing |
| No Any Major Error | No self-test errors |
| No Flexlogic Error | No error in programmed logic |
| No System Failure | All IEDs w/o failure |
| No Manual Block | No Signal to block EWCS, either by SCADA operator or during testing |

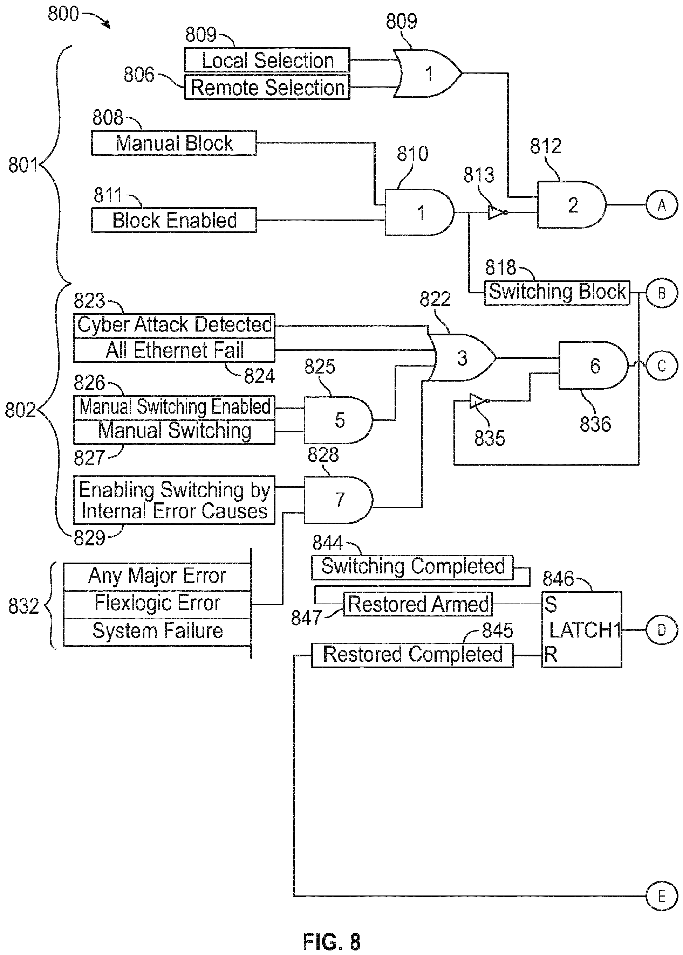

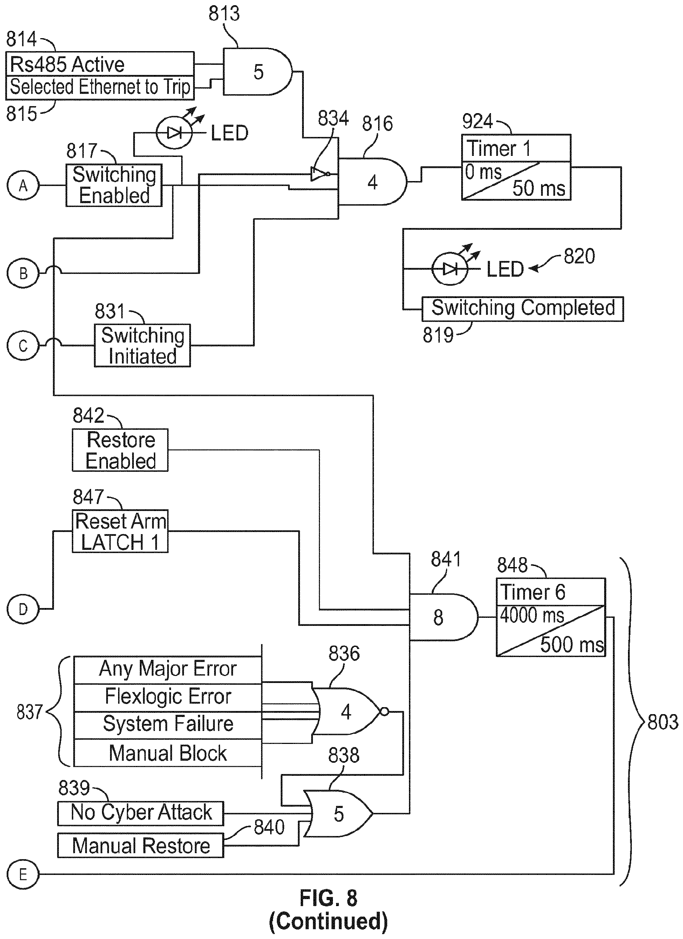

**FIG. 8** illustrates an example system logical flow diagram 800 according to an embodiment of the disclosure. The system logical flow diagram 800 may be an example of a logical flow diagram for a particular group of IEDS and/or communication channels that are used, and may differ based on different IEDs and/or communication channels. For simplicity, the logical flow diagram 800 may be described with reference to three sections, a first section 801, a second section 802, and a third section 803. However, the first section 801, a second section 802, and a third section 803 may all be logically connected and may only be described separately for simplicity sake.

The first section 801 of the logical flow diagram 800 may include one or more logical OR gates (e.g., logical OR gate 804 and 807) and one or more logical AND gates (e.g., logical AND gate 810, 812, 813, and 816). The logical OR gate 807 may be an input to the logical AND gate 810, and then logical AND gate 810 and the logical OR gate 804 may both be inputs to the logical AND gate 812. The input from logical AND gate 810 may involve a NOT gate 833. The logical AND gate 812 and the logical AND gate 813 may be inputs to the logical AND gate 816. Each of the logical AND and/or OR gates may be associated with one or more inputs. For example, the logical OR gate 804 may include a local selection input 805 and a remote selection input 806 that may arrive from a local or Remote SCADA system. The logical OR gate 807 may include a manual block input 808. The logical AND gate 810 may include a block enabled input 811. The logical AND gate 813 may include an RS485 active input 814 and a selected Ethernet to trip 815 input. The logical AND gate 816 may include a switching enabled input 817, a switching block input 818, and/or a switching initiated input 831. The switching block input 818 may involve a logical NOT gate 834. The switching enabled input 817 maybe an output of the logical AND gate 812. The switching block input 818 may be an output of the logical AND gate 810. The switching initiated input 831 may be an output of the logical AND gate 830 of section 802 of the logical flow diagram 800 as described herein. In some instances, the logical AND gate 816 may also have a switching completed output 819 and/or an LED indicator 820. The switching completed output 819 may be based on a timer 821.

The second section 802 of the logical flow diagram 800 may also include one or more logical OR gates (e.g., logical OR gate 822) and one or more logical AND gates (e.g., logical AND gates 825, 828, and 830). The logical AND gates 825 and 828 may be inputs to the logical OR gate 822, and the logical OR gate 822 as well as the output from the logical AND gate 810 of section 801 may be inputs to the logical AND gate 830. Finally, the logical AND gate 830 may be an input to the logical AND gate 816 of first section 801. Each of the logical AND and/or OR gates may be associated with one or more inputs. For example, the logical OR gate may include a cyber-attack detected input 823 and an all Ethernet fail input 824. The logical AND gate 825 may include a manual switching enabled input 826 and a manual switching input 827. The logical AND gate 828 may include an enabling switching by internal error causes input 829. Examples of such internal error causes 832 may include some or all of the conditions provided in Table 1 and described in Table 2 above. The logical AND gate 830 may have as inputs the output of the logical OR gate 822 and the switching block input 818 of section 801 of the logical flow diagram 800. The switching block input 818 may involve a logical NOT gate 835. The output of the logical AND gate 830 may be the switching initiated input 831, which as described previously, may be an input to the logical AND gate 816 of first section 801.

The third section 803 of the logical flow diagram 800 may also include one or more logical OR gates (e.g., logical OR gates 838 and logical NOR gate 836) and one or more logical AND gates (e.g., logical AND gate 838). Logical NOR gate 836 may be an input to logical OR gate 838 and logical OR gate 838 may be an input to logical AND gate 841. The output of logical AND gate 812 of the first section 801 (the switching enabled output 817) may also be an input to logical AND gate 841. Each of the logical AND and/or OR gates may be associated with one or more inputs. For example, logical NOR gate 836 includes one or more inputs 837. Examples of such inputs 837 may include any major error, a flexlogic error, and/or a system failure, which may include some or all of the conditions provided in Table 1 and described in Table 2 above. These error signals may be available in any IED to indicate unavailability of the communication channel or some internal error that could affect the IED. The logical AND gate 838 may include a no cyber-attack input 839 and a manual restore input 840. The logical AND gate 841 may include a restore enabled input 842 and a reset arm latch input 843. The reset arm latch input 832 may also include an input in the form of an output of a latch 846. The latch 846 may include its own inputs, such as a switching completed input 844 and a restore completed input 845. An output of the logical AND gate 841 may include a timer 848 that feeds to the restore completed input 845 of the latch 846.

### EXAMPLE METHOD

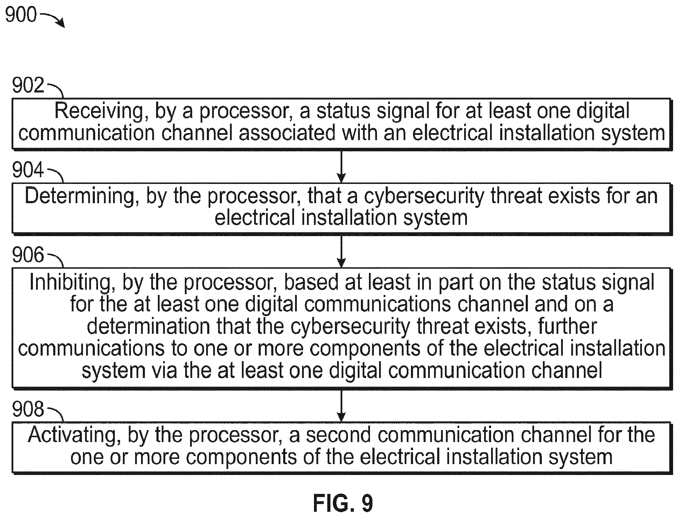

**FIG. 9** illustrates an example method 900 according to an embodiment of the disclosure. In some embodiments, the method 900 may include an operation 902 of receiving, by a processor, a status signal for at least one digital communication channel associated with an electrical installation system. The digital communication channel may be a main or primary communication channel that is in use by components of the installation during normal operation (that is, when a cybersecurity threat has not been detected). In some embodiments, the method 900 may include an operation 904 of determining, by the processor, that a cybersecurity threat exists for an electrical installation system. Operations 902 and/or 904 may be performed, for example, in conjunction with cyberthreat detection by a digital twin or digital installation replica.

In some embodiments, the method 900 may include an operation 906 of inhibiting, by the processor, based at least in part on the status signal for the at least one digital communications channel and on a determination that the cybersecurity threat exists, further communications to one or more components of the electrical installation system via the at least one digital communication channel. In some embodiments, inhibiting communications to one or more components of the electrical installation system may involve deactivating the digital communication channel on which a cybersecurity threat has been detected. This may serve to mitigate the risk that the threat will continue to exist on any active installation communication channels. Additionally, in some embodiments, the method 900 may include an operation 908 of activating, by the processor, a second communication channel for the one or more components of the electrical installation system. The second communication channel may be an alternative communication channel that may be used by the components of the installation instead of the main, digital communication channel. The second communication channel may either be another digital communication channel or may also be an analog communication channel. In some instances, the second communication channel may be active in parallel with the digital communication channel, and the digital communication channel may simply be deactivated, with the secondary communication channel continuing operations and/or taking over as the primary communication channel. In other instances, however, only the digital communication channel may be active during normal operation of the installation, and the second communication channel may only be activated upon detection of a cybersecurity threat and a deactivation of the digital communication channel.

### EXAMPLE COMPUTER HARDWARE ARCHITECTURE

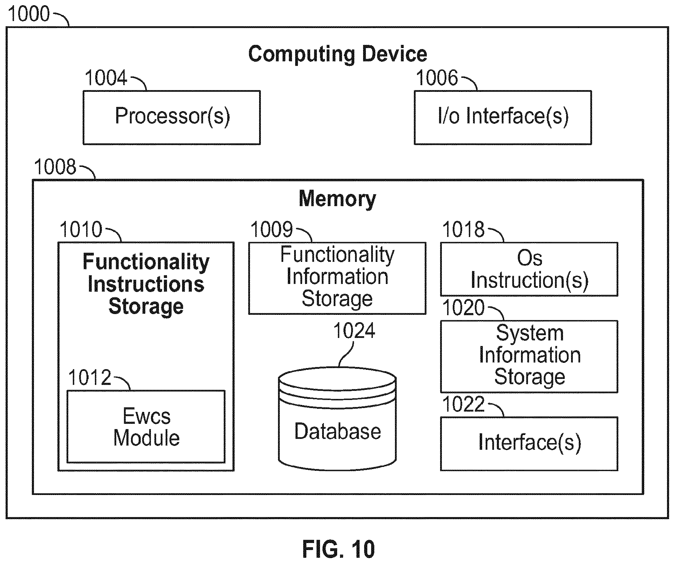

**FIG. 10** illustrates an example computer hardware architecture according to an embodiment of the disclosure. **FIG. 10** illustrates a block diagram of an example of an computing device 1000 in accordance with one or more aspects of the disclosure. The example computing device 1000 is merely illustrative and is not intended to suggest or otherwise convey any limitation as to the scope of use or functionality of the computing device's architecture.

The computing device 1000 represents an example implementation of various aspects of the disclosure in which the processing or execution of operations described in connection with systems and methods for network configuration management as disclosed herein can be performed in response to execution of one or more software components at the computing device 1000. The computing device 1000 may represent any of the devices described herein, such as the EWCS 102 with reference to **FIG. 1****,** the main communication controller 204 and/or alternative communication controller 206, and or any other component described herein. It should be appreciated that the one or more software components can render the computing device 1000, or any other computing device that contains such components, a particular machine for systems and methods for network configuration management as described herein, among other functional purposes. A software component can be embodied in or can comprise one or more computer-accessible instructions, e.g., computer-readable and/or computer-executable instructions. In one scenario, at least a portion of the computer-accessible instructions can embody and/or can be executed to perform at least a part of one or more of the example methods and/or process flows described herein, such as the example methods and or process flows (and/or control schemes) presented in at least **FIGs. 5-9****.** For instance, to embody one such method, at least a portion of the computer-accessible instructions can be persisted (e.g., stored, made available, or stored and made available) in a computer storage non-transitory medium and executed by a processor. The one or more computer-accessible instructions that embody a software component can be assembled into one or more program modules that can be compiled, linked, and/or executed at the computing device 1000 or other computing devices. Generally, such program modules comprise computer code, routines, programs, objects, components, information structures (e.g., data structures and/or metadata structures), etc., that can perform particular tasks (e.g., one or more operations) in response to execution by one or more processors, which can be integrated into the computing device 1000 or functionally coupled thereto.

The various example embodiments of the disclosure can be operational with numerous other general purpose or special purpose computing system environments or configurations. Examples of well-known computing systems, environments, and/or configurations that can be suitable for implementation of various aspects of the disclosure in connection with systems and methods for network configuration management as described herein can comprise personal computers; server computers; laptop devices; handheld computing devices, such as mobile tablets; wearable computing devices; and multiprocessor systems. Additional examples can include set-top boxes, programmable consumer electronics, network PCs, minicomputers, mainframe computers, blade computers, programmable logic controllers (PLCs), distributed computing environments that comprise any of the above systems or devices, or the like.

As illustrated, the computing device 1000 can comprise one or more processors 1004, one or more input/output (I/O) interfaces 1006, one or more memory devices 1008 (herein referred to generically as memory 1008), and a bus architecture 1009 (also termed bus 1009) that functionally couples various functional elements of the computing device 1000. In certain embodiments, the computing device 1000 can include, optionally, a radio unit (not depicted in **FIG. 10**). The radio unit can include one or more antennas and a communication processing unit that can permit wireless communication between the computing device 1000 and one or more other devices. The bus 1009 can include at least one of a system bus, a memory bus, an address bus, or a message bus, and can permit exchange of information (data, metadata, and/or signaling) between the processor(s) 1004, the I/O interface(s) 1006, and/or the memory 1008, or respective functional elements therein. In scenarios in which processor(s) 1004 include multiple processors, the computing device 1000 can utilize parallel computing.

The I/O interface(s) 1006 can permit communication of information between the computing device and an external device, such as another computing device, e.g., a network element or an end-user device. Such communication can include direct communication or indirect communication, such as exchange of information between the computing device 1000 and the external device via a network or elements thereof. In some embodiments, the I/O interface(s) 1006 can comprise one or more of network adapter(s) and peripheral adapter(s). Such adapter(s) can permit or facilitate connectivity between the external device and one or more of the processor(s) 1004 or the memory 1008. For example, the peripheral adapter(s) can include a group of ports, which can comprise at least one of parallel ports, serial ports, Ethernet ports, V.35 ports, or X.21 ports, wherein parallel ports can comprise General Purpose Interface Bus (GPIB), IEEE-1284, while serial ports can include Recommended Standard (RS)-232, V.11, Universal Serial Bus (USB), FireWire or IEEE-1394.

In one aspect, at least one of the network adapter(s) can functionally couple the computing device 1000 to one or more other devices via one or more traffic and signaling pipes that can permit or facilitate exchange of traffic and signaling between the computing device 1000 and the one or more other devices. Such network coupling provided at least in part by the at least one of the network adapter(s) can be implemented in a wired environment, a wireless environment, or a combination of both. The information that is communicated by the at least one of the network adapter(s) can result from implementation of one or more operations in a method of the disclosure. Such output can include any form of visual representation, including, but not limited to, textual, graphical, animation, audio, tactile, or the like.

In one aspect, the bus 1009 represents one or more of several possible types of bus structures, including a memory bus or memory controller, a peripheral bus, an accelerated graphics port, and a processor or local bus using any of a variety of bus architectures. As an illustration, such architectures can comprise an Industry Standard Architecture (ISA) bus, a Micro Channel Architecture (MCA) bus, an Enhanced ISA (EISA) bus, a Video Electronics Standards Association (VESA) local bus, an Accelerated Graphics Port (AGP) bus, and a Peripheral Component Interconnects (PCI) bus, a PCI-Express bus, a Personal Computer Memory Card Industry Association (PCMCIA) bus, a Universal Serial Bus (USB) and the like. The bus 1009, and all buses described herein can be implemented over a wired or wireless network connection and each of the subsystems, including the processor(s) 1004, the memory 1008 and memory elements therein, and the I/O interface(s) 1006 can be contained within one or more remote computing devices at physically separate locations, connected through buses of this form, thereby effectively implementing a fully distributed system.

The computing device 1000 can comprise a variety of computer-readable media. Computer-readable media can be any available media (transitory and non-transitory) that can be accessed by a computing device. In one aspect, computer-readable media can comprise computer non-transitory storage media (or computer-readable non-transitory storage media) and communications media. Example computer-readable non-transitory storage media can be any available media that can be accessed by the computing device 1000, and can comprise, for example, both volatile and non-volatile media, and removable and/or non-removable media. In one aspect, the memory 1008 can comprise computer-readable media in the form of volatile memory, such as random access memory (RAM), and/or non-volatile memory, such as read-only memory (ROM).

The computing device 1000 may also include a database 1024. Although **FIG. 10** depicts the database 1024 as being included within the computing device 1000, the database 1024 may be included within the computing device 1000 or may also be located externally to the computing device 1000.

The memory 1008 can comprise functionality instructions storage 1010 and functionality information storage 1014. The functionality instructions storage 1010 can comprise computer-accessible instructions that, in response to execution by at least one of the processor(s) 1004, can implement one or more of the functionalities of the disclosure. The computer-accessible instructions can embody or can comprise one or more software components illustrated as EWCS module 1012. In one scenario, execution of at least one component of the EWCS module 1012 can implement one or more of the example methods and/or process flows described herein, such as the example methods and or process flows (and/or control schemes) presented in at least **FIGS. 5-9****.** For instance, such execution can cause a processor that executes the at least one component to carry out a disclosed example method and/or process flow. It should be appreciated that, in one aspect, a processor of the processor(s) 1004 that executes at least one of the EWCS module 1012 can retrieve information from or retain information in a memory element 1008 in the functionality information storage 1014 in order to operate in accordance with the functionality programmed or otherwise configured by the EWCS module 1012. Such information can include at least one of code instructions, information structures, or the like. Such instructions and information structures can embody or can constitute machine-learning techniques (e.g., pattern recognition algorithms, inference algorithms, and the like) that can be utilized to implement at least certain functionality described herein. At least one of the one or more interfaces (e.g., application programming interface(s)) can permit or facilitate communication of information between two or more components within the functionality instructions storage 1010. The information that is communicated by the at least one interface can result from implementation of one or more operations in a method of the disclosure. In certain embodiments, one or more of the functionality instructions storage 1010 and the functionality information storage 1014 can be embodied in or can comprise removable/non-removable, and/or volatile/non-volatile computer storage media.

At least a portion of at least one of the EWCS module 1012 can program or otherwise configure one or more of the processors 1004 to operate at least in accordance with the functionality described herein. In one embodiment, the EWCS module 1012 contained in the functionality instruction(s) storage 1010 can include one or more components that can provide the functionality described herein in connection with systems and methods for network configuration management. One or more of the processor(s) 1004 can execute at least one of the EWCS module 1012 and leverage at least a portion of the information in the functionality information storage 1014 in order to provide systems and methods for network configuration management in accordance with one or more aspects described herein.

It should be appreciated that, in certain scenarios, the functionality instruction(s) storage 1014 can embody or can comprise a computer-readable non-transitory storage medium having computer-accessible instructions that, in response to execution, cause at least one processor (e.g., one or more of processor(s) 1004) to perform a group of operations comprising the operations or blocks described in connection with the disclosed methods.

In addition, the memory 1008 can comprise computer-accessible instructions and information (e.g., data and/or metadata) that permit or facilitate operation and/or administration (e.g., upgrades, software installation, any other configuration, or the like) of the computing device 1000. Accordingly, as illustrated, the memory 1008 can comprise a memory element 1018 (labeled operating system (OS) instruction(s) 1018) that can contain one or more program modules that embody or include one or more operating systems, such as a Windows operating system, Unix, Linux, Symbian, Android, Chromium, or substantially any OS suitable for mobile computing devices or tethered computing devices. In one aspect, the operational and/or architectural complexity of the computing device 1000 can dictate a suitable OS. The memory 1008 also comprises a system information storage 1020 having data and/or metadata that permits or facilitates operation and/or administration of the computing device 1010. Elements of the OS instruction(s) 1018 and the system information storage 1020 can be accessible or can be operated on by at least one of the processor(s) 1004.

It should be recognized that while the functionality instructions storage 1010 and other executable program components, such as the OS instruction(s) 1018, are illustrated herein as discrete blocks, such software components can reside at various times in different memory components of the computing device 1000, and can be executed by at least one of the processor(s) 1014. In certain scenarios, an implementation of the EWCS module 1012 can be retained on or transmitted across some form of computer-readable media.

The computing device 1000 can include a power supply (not shown), which can power up components or functional elements within such devices. The power supply can be a rechargeable power supply, e.g., a rechargeable battery, and it can include one or more transformers to achieve a power level suitable for operation of the computing device 1000, and components, functional elements, and related circuitry therein. In certain scenarios, the power supply can be attached to a conventional power grid to recharge and ensure that such devices can be operational. In one aspect, the power supply can include an I/O interface (e.g., one of the network adapter(s)) to connect operationally to the conventional power grid. In another aspect, the power supply can include an energy conversion component, such as a solar panel, to provide additional or alternative power resources or autonomy for the computing device 1000.

The computing device 1000 can operate in a networked environment by utilizing connections to one or more other devices. As an illustration, the one or more other devices can be a personal computer, a portable computer, a server, a router, a network computer, a peer device or other common network node, and so on. As described herein, connections (physical and/or logical) between the computing device 1000 and a computing device of the one or more other devices can be made via one or more traffic and signaling pipes, which can comprise wireline link(s) and/or wireless link(s) and several network elements (such as routers or switches, concentrators, servers, and the like) that form a local area network (LAN) and/or a wide area network (WAN). Such networking environments are conventional and commonplace in dwellings, offices, enterprise-wide computer networks, intranets, local area networks, and wide area networks.

For purposes of simplicity of explanation, the example methods disclosed herein are presented and described as a series of blocks. However, it is to be understood and appreciated that the disclosed methods are not limited by the order of blocks and associated actions, as some blocks may occur in different orders and/or concurrently with other blocks from that shown and described herein. For example, the various methods or processes of the disclosure can be alternatively represented as a series of interrelated states or events, such as in a state diagram. Furthermore, not all illustrated blocks and associated action(s) may be required to implement a method in accordance with one or more aspects of the disclosure. Further yet, two or more of the disclosed methods or processes can be implemented in combination with each other, to accomplish one or more features or advantages described herein. At least a portion of the methods described herein can be implemented (e.g., configured (such as linked, compiled, a combination thereof, or the like); executed; configured and executed; or the like) by a system having at least one processor and at least one information storage devices (which also may be referred to as at least one memory device or at least one memory). Such a system can comprise one or more computing devices or one or more processors, and can be employed to execute computer-accessible instructions retained in a memory, or any computer-readable or machine-readable medium, to implement the methods described herein. The computer-accessible instructions can provide a computer-executable or machine-executable framework to implement the methods described herein.

It should be further appreciated that the example methods of the disclosure can be retained on an article of manufacture, or computer-readable medium, to permit or otherwise facilitate transporting and transferring such methods to a computing device (e.g., a desktop computer, a mobile computer, such as a tablet or a smartphone; a mobile telephone, a blade computer, a programmable logic controller, and the like) for execution, and thus implementation, by a processor of the computing device or for storage in a memory thereof.

## Claims

1. A computer-implemented method (900) comprising:
receiving, by a processor (1004), a status signal for at least one digital communication channel associated with an electrical installation system;
determining, by the processor (1004), that a cybersecurity threat exists for an electrical installation system (406);
inhibiting, by the processor (1004), based at least in part on the status signal for the at least one digital communications channel (224, 502, 504, 602, 604, 702, 704) and on a determination that the cybersecurity threat exists, further communications to one or more components (508, 608, 609, 610, 708) of the electrical installation system (406) via the at least one digital communication channel (224, 502, 504, 602, 604, 702, 704); and
activating, by the processor (1004), a second communication channel (224, 502, 504, 602, 604, 702, 704) for the one or more components (508, 608, 609, 610, 708) of the electrical installation system.

2. The method (900) of claim 1, further comprising:
determining, by the processor (1004), the cybersecurity threat does not exist; and
activating, by the processor (1004), the at least one digital communication channel (224, 502, 504, 602, 604, 702, 704) and disconnecting the second communication channel (224, 502, 504, 602, 604, 702, 704) from the one or more components (508, 608, 609, 610, 708) of the electrical installation system.

3. The method (900) of claim 1 or claim 2, wherein a determination that a cybersecurity threat exists for an electrical installation system (406) is based at least in part on an indication from at least one of a digital twin of the electrical installation system (406) or a firewall of at least one network associated with the electrical installation system.

4. The method (900) of any one of claims 1 to 3, wherein inhibiting further communications to the electrical installation system (406) via the at least one digital communication channel (224, 502, 504, 602, 604, 702, 704) comprises disconnecting one or more components (508, 608, 609, 610, 708) of the electrical installation system (406) from the at least one digital communication channel (224, 502, 504, 602, 604, 702, 704).

5. The method (900) of any one of claims 1 to 4, wherein activating the second communication channel (224, 502, 504, 602, 604, 702, 704) on the electrical installation system (406) comprises enabling at least one serial communication port for an intelligent electronic device (IED) (508, 608, 609, 610, 708) associated with the electrical installation system.

6. The method (900) of any one of claims 1 to 5, wherein the second communication channel (224, 502, 504, 602, 604, 702, 704) is an analog or serial communication channel (224, 502, 504, 602, 604, 702, 704), and wherein the second communication channel (224, 502, 504, 602, 604, 702, 704) is not in communication with a local area network, or the Internet.

7. The method (900) of any one of claims 1 to 6, wherein the second communication channel (224, 502, 504, 602, 604, 702, 704) comprises an analog communication channel (224, 502, 504, 602, 604, 702, 704) facilitated by one or more intelligent electronic device (IED) (508, 608, 609, 610, 708) associated with the electrical installation system.

8. The method (900) of any one of claims 1 to 7, wherein disconnecting one or more components (508, 608, 609, 610, 708) of the electrical installation system (406) from the at least one digital communication channel (224, 502, 504, 602, 604, 702, 704) further comprises continuing secure communications on other components of the electrical installation system (406) using an alternative digital communication channel (224, 502, 504, 602, 604, 702, 704).

9. A system (102, 202, 302, 402) comprising:
a computer processor (1004) operable to execute a set of computer-readable instructions; and
a memory (1008) operable to store the set of computer-readable instructions operable to:
receive a status signal for at least one digital communication channel (224, 502, 504, 602, 604, 702, 704) associated with an electrical installation system;
determine that a cybersecurity threat exists for an electrical installation system;
inhibiting, based at least in part on the status signal and on a determination that the cybersecurity threat exists, further communications to one or more components (508, 608, 609, 610, 708) of the electrical installation system (406) via the at least one digital communication channel (224, 502, 504, 602, 604, 702, 704); and
activating a second communication channel (224, 502, 504, 602, 604, 702, 704) for the one or more components (508, 608, 609, 610, 708) of the electrical installation system.

10. The system (102, 202, 302, 402) of claim 9, wherein the set of computer-readable instructions is further operable to:
determine the cybersecurity threat does not exist; and
activate the at least one digital communication channel (224, 502, 504, 602, 604, 702, 704) and disconnecting the second communication channel (224, 502, 504, 602, 604, 702, 704) from the one or more components (508, 608, 609, 610, 708) of the electrical installation system.

11. The system (102, 202, 302, 402) of claim 9 or claim 10, wherein the set of computer-readable instructions operable to determine that a cybersecurity threat exists, further comprises instructions operable to determine that the cybersecurity threat exists based at least in part on an indication from at least one of a digital twin of the electrical installation system (406) or a firewall of at least one network associated with the electrical installation system.

12. The system (102, 202, 302, 402) of any one of claims 9 to 11, wherein the set of computer-readable instructions operable to inhibit further communications to the electrical installation system (406) via the at least one digital communication channel (224, 502, 504, 602, 604, 702, 704) further comprises instructions operable to disconnect one or more components (508, 608, 609, 610, 708) of the electrical installation system (406) from the at least one digital communication channel (224, 502, 504, 602, 604, 702, 704).

13. The system (102, 202, 302, 402) of any one of claims 9 to 12, wherein the set of computer-readable instructions operable to activate the second communication channel (224, 502, 504, 602, 604, 702, 704) on the electrical installation system (406) further comprises instructions operable to enable at least one serial communication port for an intelligent electronic device (IED) (508, 608, 609, 610, 708) associated with the electrical installation system.

14. The system (102, 202, 302, 402) of any one of claims 9 to 13, wherein the second communication channel (224, 502, 504, 602, 604, 702, 704) is an analog or serial communication channel (224, 502, 504, 602, 604, 702, 704), and wherein the second communication channel (224, 502, 504, 602, 604, 702, 704) is not in communication with a local area network, or the Internet.

15. The system (102, 202, 302, 402) of any one of claims 9 to 14, wherein the second communication channel (224, 502, 504, 602, 604, 702, 704) comprises an analog communication channel (224, 502, 504, 602, 604, 702, 704) facilitated by one or more intelligent electronic device (IED) (508, 608, 609, 610, 708) associated with the electrical installation system, wherein the set of computer-readable instructions operable to disconnect one or more components (508, 608, 609, 610, 708) of the electrical installation system (406) from the at least one digital communication channel (224, 502, 504, 602, 604, 702, 704) further comprises instructions operable to continue secure communications on other components of the electrical installation system (406) using an alternative digital communication channel (224, 502, 504, 602, 604, 702, 704).
